# EUROPEAN PATENT SPECIFICATION

(11) **EP 1 870 700 B1**
(45) Date of publication and mention of the grant of the patent: **20.08.2008**
(21) Application number: 07011062.2
(22) Date of filing: 05.06.2007
(51) Int. Cl.: G01N 27/12

(54) **Oxygen sensor, and internal combustion engine and transportation apparatus incorporating the same**
Sauerstoffsensor, Verbrennungsmotor und Transportvorrichtung damit
Capteur d'oxygène, et moteur à combustion interne et appareil de transport l'incorporant

(30) Priority: 23.06.2006 JP 2006174055
(43) Date of publication of application: 26.12.2007
(73) Proprietor: Yamaha Hatsudoki Kabushiki Kaisha, Iwata-shi, Shizuoka-ken 438-8501 (JP)
(72) Inventor: Kondo, Mitsuo, c/o Yamaha Hatsudoki K. K., Iwata-shi, Shizuoka-ken 438-8501 (JP)
(74) Representative: Grünecker, Kinkeldey, Stockmair & Schwanhäusser Anwaltssozietät

(56) References cited:
- EP-A2- 0 115 953
- DE-A1- 4 027 905
- JP-A- 2003 149 189
- JP-A- 2004 093 547
- US-A1- 2003 057 109
- US-A1- 2006 081 473
- IZU N ET AL: "Resistive oxygen gas sensors based on Ce1-xZrxO2 nano powder prepared using new precipitation method" SENSORS AND ACTUATORS B, ELSEVIER SEQUOIA S.A., LAUSANNE, CH, vol. 108, no. 1-2, 22 July 2005 (2005-07-22), pages 238-243, XP004928460 ISSN: 0925-4005
- IZU N ET AL: "The effects of the particle size and crystallite size on the response time for resistive oxygen gas sensor using cerium oxide thick film" SENSORS AND ACTUATORS B, ELSEVIER SEQUOIA S.A., LAUSANNE, CH, vol. 94, no. 2, 1 September 2003 (2003-09-01), pages 222-227, XP004443607 ISSN: 0925-4005

## Description

### BACKGROUND OF THE INVENTION

### 1. Field of the Invention :

The present invention relates to an oxygen sensor, and in particular to a resistance-type oxygen sensor having an oxide semiconductor layer. Moreover, the present invention also relates to an internal combustion engine and a transportation apparatus incorporating such an oxygen sensor.

### 2. Description of the Related Art:

From the standpoint of environmental issues and energy issues, it has been desired to improve the mileage of internal combustion engines, and reduce the emission amount of regulated substances (e.g., NOₓ) that are contained within exhaust gas from internal combustion engines. In order to meet these needs, it is necessary to appropriately control the ratio between fuel and air in accordance with the state of combustion, so that fuel combustion will occur always under optimum conditions. The ratio of air to fuel is called an "air-fuel ratio" (A/F). In the case where a ternary catalyst is employed, the optimum air-fuel ratio would be the stoichiometric air-fuel ratio. The "stoichiometric air-fuel ratio" is an air-fuel ratio at which air and fuel will combust just sufficiently.

When fuel is combusting at the stoichiometric air-fuel ratio, a certain amount of oxygen is contained within the exhaust gas. When the air-fuel ratio is smaller than the stoichiometric air-fuel ratio. (i.e., the fuel concentration is relatively high), the oxygen amount in the exhaust gas decreases relative to that under the stoichiometric air-fuel ratio. On the other hand, when the air-fuel ratio is greater than the stoichiometric air-fuel ratio (i.e., the fuel concentration is relatively low), the oxygen amount in the exhaust gas increases. Therefore, by measuring the oxygen amount or oxygen concentration in the exhaust gas, it is possible to estimate how much deviation the air-fuel ratio has relative to the stoichiometric air-fuel ratio. This makes it possible to adjust the air-fuel ratio and control the fuel combustion so as to occur under the optimum conditions.

As oxygen sensors for measuring the oxygen concentration in exhaust gas, oxygen sensors comprising a solid electrolyte as disclosed in Japanese Laid-Open Patent Publication No. 8-114571 and resistance-type oxygen sensors as disclosed in Japanese Laid-Open Patent Publication No. 5-18921 are known.

An oxygen sensor comprising a solid electrolyte measures oxygen concentration by measuring a difference in oxygen partial pressure between a reference electrode and a measuring electrode as an electromotive force. Therefore, in this type of oxygen sensor, it is necessary to expose the measuring electrode and the reference electrode to exhaust gas and air, respectively. This complicates the structure of the oxygen sensor itself, and also complicates any structure which may be employed for attaching the oxygen sensor to an exhaust pipe. The complicated structure also makes it difficult to downsize the oxygen sensor.

On the other hand, a resistance-type oxygen sensor detects changes in the resistivity of an oxide semiconductor layer which is provided so as to be in contact with exhaust gas. When the oxygen partial pressure within the exhaust gas changes, the oxygen vacancy concentration in the oxide semiconductor layer fluctuates, thus causing a change in the resistivity of the oxide semiconductor layer. Therefore, by detecting such a change in resistivity, the oxygen concentration can be measured. Since a resistance-type oxygen sensor does not require a reference electrode, the structure of the oxygen sensor itself can be simplified. Moreover, the structure which may be employed for attaching the oxygen sensor to an exhaust pipe can also be simplified.

As the oxide semiconductor to be employed for a resistance-type oxygen sensor, cerium oxide is considered as promising in terms of durability and stability. As disclosed in Japanese Laid-Open Patent Publication No. 2003-149189, by ensuring that the cerium oxide microparticles contained in the oxide semiconductor layer have an average grain size of 200 nm or less, the response of the resistance-type oxygen sensor employing cerium oxide can be improved.

As is disclosed in Japanese Laid-open Patent Publication No. 2004-93547, zirconium may be added to an oxide that contains cerium, whereby the rate of electron conduction of the oxide semiconductor layer is improved. This increases the oxygen partial pressure dependence of the output of the oxygen sensor, thus leading to an improved detection accuracy.

However, due to the increased concerns on environmental issues in the recent years, there has been a desire to detect oxygen concentration with an even higher accuracy.
An O₂ resistive type gas sensor as reflected in the preamble of claim 1 is known from N. Izu et al., "Resistive oxygen gas sensors based on Ce1-xZrxO2 nano powder prepared using new precipitation method", SENSORS AND ACTUATORS B108 (2005) 238-243.
The particle size of the sensor amounts to about 100 nm.
From DE 40 27 905 A1 a gas sensor comprising cerium dioxide is known.

### SUMMARY OF THE INVENTION

The present invention has been made in view of the above problems, and an objective thereof is to improve the detection accuracy of a resistance-type oxygen sensor employing an oxide containing cerium.

An oxygen sensor according to the present invention is an oxygen sensor of a resistance-type comprising: an oxide semiconductor layer; and detection electrodes for detecting a resistivity of the oxide semiconductor layer, wherein, the oxide semiconductor layer includes oxide semiconductor particles composed of an oxide containing cerium; and the oxide semiconductor particles have a grain size distribution with a first peak existing in a grain size range of less than 1 µm and a second peak existing in a grain size range exceeding 1 µm. Thus, the aforementioned objective is met.

In a preferred embodiment, the first peak exists in a grain size range of 0.8 µm or less.

In a preferred embodiment, the first peak exists in a grain size range of 0.4 µm or less.

In a preferred embodiment, the second peak exists in a grain size range of 1.5 µm or more.

In a preferred embodiment, the second peak exists in a grain size range of 2.0 µm or more.

In a preferred embodiment, the oxide composing the oxide semiconductor particles further contains zirconium.

An internal combustion engine according to the present invention comprises an oxygen sensor having the above construction.

A transportation apparatus according to the present invention comprises an internal combustion engine having the above construction.

An oxygen sensor according to the present invention is an oxygen sensor of a resistance-type comprising an oxide semiconductor layer, such that the oxide semiconductor layer includes oxide semiconductor particles composed of an oxide containing cerium. In an oxygen sensor according to the present invention, the oxide semiconductor particles included in the oxide semiconductor layer have a grain size distribution with a first peak existing in a grain size range of less than 1 µm and a second peak existing in a grain size range exceeding 1 µm. As a result, the resistivity of the oxide semiconductor layer when in an atmosphere with a low oxygen partial pressure (i.e., fuel-rich side) is reduced, so that the sensor output has a greater oxygen partial pressure dependence. Thus, the detection accuracy is improved.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is an exploded perspective view schematically showing an oxygen sensor 10 according to a preferred embodiment of the present invention.

FIG. 2 is a cross-sectional view schematically showing an oxygen sensor 10 according to a preferred embodiment of the present invention.

FIG. 3 is a graph showing a relationship between lambda (λ) and sensor output (resistivity of an oxide semiconductor layer) when the grain size distribution of oxide semiconductor particles is varied, where the vertical axis is in logarithm.

FIG. 4 is a graph showing a relationship between lambda (λ) and sensor output (resistivity of an oxide semiconductor layer) when the grain size distribution of oxide semiconductor particles is varied, where the vertical axis is in logarithm.

FIG. 5 is a graph showing grain size distributions of oxide semiconductor particles in Example 1 and Comparative Examples 1 and 3.

FIG. 6 is a graph showing grain size distributions of oxide semiconductor particles in Examples 1 and 3 and Comparative Example 3.

FIG. 7 is a graph showing grain size distributions of oxide semiconductor particles in Examples 5 and 6.

FIG. 8 is a graph showing grain size distributions of oxide semiconductor particles in Examples 7 and 8.

FIG. 9 is a diagram showing, with respect to each of Examples 1 and 2 and Comparative Examples 1 and 3, a micrograph of the surface of the oxide semiconductor layer as well as a three-dimensional configuration of the surface of the oxide semiconductor layer.

FIGS. 10A and 10B are perspective views schematically showing a construction for affixing an oxygen sensor 10 to an exhaust pipe, where FIG. 10A shows a protection cap being unattached, and FIG. 10B shows a protection cap being attached.

FIG. 11 is a cross-sectional view schematically showing a construction for affixing an oxygen sensor 10 to an exhaust pipe.

FIG. 12 is a diagram schematically showing an exemplary motorcycle incorporating the oxygen sensor 10.

FIG. 13 is a diagram schematically showing a control system of an engine in the motorcycle shown in FIG. 12.

FIG. 14 is a flowchart showing an exemplary flow of control for the oxygen sensor 10.

### DETAILED DESCRIPTION OF PREFERRED EMBODIMENTS

Hereinafter, preferred embodiments of the present invention will be described with reference to the accompanying drawings. Note that the present invention is not to be limited to the following embodiment.

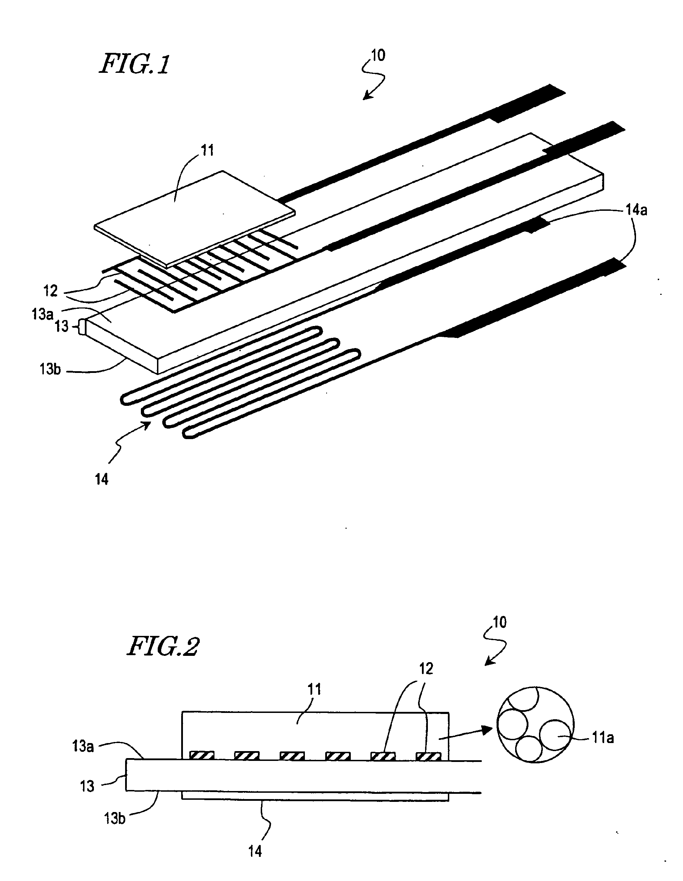

First, with reference to FIGS. 1 and 2, the structure of an oxygen sensor 10 according to the present embodiment will be described. FIGS. 1 and 2 are an exploded perspective view and a cross-sectional view, respectively, schematically showing the oxygen sensor 10. As shown in FIGS. 1 and 2, the oxygen sensor 10 is a resistance-type oxygen sensor having an oxide semiconductor layer 11 and detection electrodes 12 for detecting the resistivity of the oxide semiconductor layer 11.

The oxide semiconductor layer 11 and the detection electrodes 12 are supported by a substrate 13. The substrate 13 is formed of an insulator such as alumina or magnesia. The substrate 13 has a principal face 13a and a rear face 13b opposing each other, such that the oxide semiconductor layer 11 and the detection electrodes 12 are disposed on the principal face 13a**.**

As shown partially enlarged in FIG. 2, the oxide semiconductor layer 11 includes oxide semiconductor particles 11a composed of an oxide containing cerium. The oxide semiconductor layer 11, which has a porous structure, releases or absorbs oxygen in accordance with the oxygen partial pressure in the atmosphere. This causes a change in the oxygen concentration in the oxide semiconductor layer 11, which in turn causes a change in the resistivity of the oxide semiconductor layer 11. By measuring this change in resistivity with the detection electrodes 12, the oxygen concentration can be detected.

The oxide semiconductor layer 11 can be formed by, for example, applying a slurry containing powder of oxide semiconductor by using a screen printing technique and then baking it. As an oxide composing the oxide semiconductor particles 11a**,** cerium oxide or a composite of cerium oxide and zirconium oxide can be used, for example. By using an oxide which contains zirconium in addition to cerium, an improved detection accuracy is obtained as described in Japanese Laid-open Patent Publication No. 2004-93547, supra. The typical oxide semiconductor layer 11 dominantly includes cerium oxide (i.e., no less than 50 mol% of cerium oxide).

Although not illustrated in the figures, a catalyst layer is provided on the oxide semiconductor layer 11. The catalyst layer includes a catalytic metal and a carrier for retaining the catalytic metal. Due to the catalytic action of the catalytic metal, at least one kind of substance other than the gas to be detected (i.e., oxygen) is decomposed. Specifically, any gas or microparticles (e.g., the hydrocarbon which has failed to completely combust, carbon, and nitrogen oxide) which may unfavorably affect the oxygen detection by the oxide semiconductor layer 11 is decomposed, such gas or microparticles are prevented from attaching to the surface of the oxide semiconductor layer 11. As a catalytic metal, platinum may be used, for example. As a carrier, a ceramic material may be suitably used.

The detection electrodes 12 is formed of an electrically conductive material, e.g., a metal material such as platinum, platinum-rhodium alloy, or gold. Preferably, the detection electrodes 12 are shaped in the form of combteeth in order to enable efficiently measurement of changes in the resistivity of the oxide semiconductor layer 11.

On the rear face 13b side of the substrate 13, a heater 14 for elevating the temperature of the oxide semiconductor layer 11 is provided. In the present embodiment, the heater 14 is a heating device of a resistance heating type, which performs heating by utilizing resistance loss. When a voltage is applied to electrodes 14a which extend from the heater 14, an electric current flows in the heating element that is formed in a predetermined shape, whereby the heating element generates heat. The heat is conducted to the oxide semiconductor layer 11 via the substrate 13. The heating element is often formed of a metal material. By elevating the temperature of the oxide semiconductor layer 11 with the heater 14, the oxide semiconductor layer 11 can be quickly activated at the start of the internal combustion engine.

The oxide semiconductor particles 11a in the oxide semiconductor layer 11 of the present embodiment have a grain size distribution with a plurality of peaks which respectively exist within predetermined ranges. Specifically, the grain size distribution of the oxide semiconductor particles 11a has a first peak existing in a grain size range of less than 1 µm and a second peak existing in a grain size range exceeding 1 µm. Because the oxide semiconductor particles 11a have such a grain size distribution, a good detection accuracy can be obtained. The reason thereof will be described below.

The inventor has conducted various studies for improving the detection accuracy of resistance-type oxygen sensors, and discovered a phenomenon that the resistivity of the oxide semiconductor layer is reduced by allowing oxide semiconductor particles composed of an oxide containing cerium to have the aforementioned grain size distribution. Conventionally, it has been known that the response of an oxygen sensor is improved by prescribing a very small average grain size for the oxide semiconductor particles, e.g., 200 nm or less, as described in Japanese Laid-Open Patent Publication No. 2003-149189. On the other hand, according to the present embodiment, it is ensured that the grain size distribution of the oxide semiconductor particles 11a has a plurality of peaks, such that a peak exists not only in a grain size range of less than 1 µm but also, purposely, in a grain size range exceeding 1 µm.

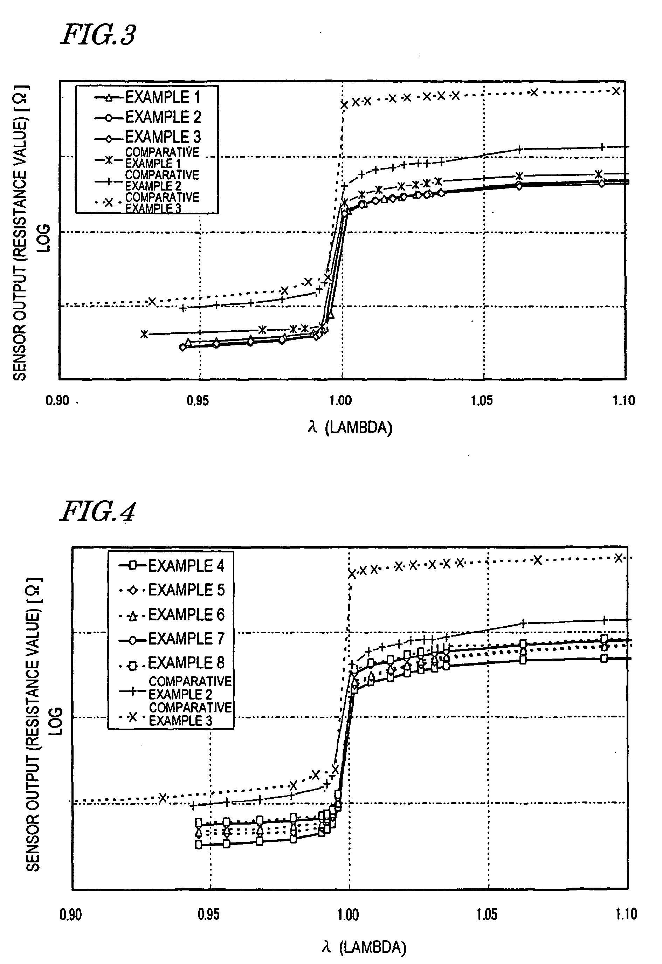

Table 1 and FIG. 3 show results of measuring the resistivity (i.e., sensor output) of the oxide semiconductor layer 11 with respect to actually-prototyped oxygen sensors 10, where the grain size distribution of the oxide semiconductor particles 11a was varied. In the example illustrated herein, two kinds of slurries ("slurry I" and "slurry II") containing ceria-zirconia powders having median diameters (D50) of 0.15 µm and 1.5 µm, respectively, were prepared, and the mixing ratio between slurry I and slurry II was varied, thus varying the overall grain size distribution. Slurry I and slurry II contained α -terpineol as a solvent and ethyl-cellulose type resin as an organic binder. The oxide semiconductor layer 11 had a thickness of 10 µm after baking. Note that lambda (λ), shown on the horizontal axis in FIG. 3, is a value indicating how deviated an actual air-fuel ratio is from a stoichiometric air-fuel ratio, as expressed by the formula: *λ* =(supplied air amount)/(theoretically required air amount). When λ =1 (i.e., center of the graph), the air-fuel ratio is equal to the stoichiometric air-fuel ratio. On the other hand, when λ<1 (i.e., left-hand side of the graph), the supplied air amount is insufficient, so that the mixture is dense ("rich"). When λ >1 (i.e., right-hand side of the graph), the supplied air amount is excessive, so that the mixture is thin ("lean").

**[Table 1]**

| | grain size of slurry I D50 (µm) | grain size of slurry II D50 (µm) | mixing ratio of slurry II(I+II) | thick-ness (µm) | grain size of slurry II/grain size of slurry I | print-ability (mold-ability) | resis-tivity gap (orders of magnitude) |
|---|---|---|---|---|---|---|---|
| CE.1 | 0.15 | 1.5 | 100% | 10 | 0.0 | × | 2 |
| Ex.1 | 0.15 | 1.5 | 70% | 10 | 10.0 | ○ | 2 |
| Ex.2 | 0.15 | 1.5 | 50% | 10 | 10.0 | ○ | 2 |
| Ex.3 | 0.15 | 1.5 | 20% | 10 | 10.0 | ○ | 2 |
| CE.2 | 0.15 | 1.5 | 0% | 10 | 10.0 | ○ | 2 |
| CE.3 | 2 | - | 100% | 10 | 0.0 | ○ | 1.5 |

| | | | | | | | |
|---|---|---|---|---|---|---|---|
| Ex.: Example CE.: Comparative Example | | | | | | | |

With reference to FIG. 3, a comparison between Comparative Example 1 (in which only slurry I is used) and Comparative Example 2 (in which only slurry II is used) shows that the resistivity of the oxide semiconductor layer 11 decreases as the grain size of the ceria-zirconia powder decreases. Moreover, in Comparative Example 3 (in which a slurry containing a ceria-zirconia powder having a median diameter (D50) of 2 µm is used), the resistivity of the oxide semiconductor layer 11 is further increased from those of Comparative Example 1 and Comparative Example 2, and the gap between the resistivity in the rich region and the resistivity in the lean region is reduced as compared to Comparative Examples 1 and 2. In order to adequately detect oxygen concentration, it is preferable that there are two or more orders of magnitude of a resistivity gap. Therefore, with Comparative Example 3, it is difficult to adequately detect oxygen concentration.

On the other hand, Examples 1, 2, and 3, in which both slurry I and slurry II are used, the resistivity of the oxide semiconductor layer 11 is reduced as compared to Comparative Example 1, with a particularly large decrease in resistivity in the rich region, despite the fact that a ceria-zirconia powder with a greater average grain size is used than in Comparative Example 1.

Table 2 and FIG. 4 show other results of sensor output measurements in actually-prototyped oxygen sensors 10.

**[Table 2]**

| | grain size of slurry I D50 (µm) | grain size of slurry II D50 (µm) | mixing ratio of slurry I/(I+II) | thick-ness (µm) | grain size of slurry II/grain size of slurry | print-ability (mold-ability) | resis-tivity gap (orders of magnitude) |
|---|---|---|---|---|---|---|---|
| Ex.4 | 0.15 | 2 | 70% | 10 | 13.3 | ○ | 2 |
| Ex.5 | 0.3 | 2.5 | 70% | 10 | 8.3 | ○ | 2 |
| Ex.6 | 0.4 | 1.5 | 70% | 10 | 3.8 | ○ | 2 |
| Ex.7 | 0.8 | 1.5 | 70% | 10 | 1.9 | ○ | 2 |
| Ex.8 | 0.8 | 3 | 70% | 10 | 3.8 | ○ | 2 |

As can be seen from Table 2, in the above-illustrated examples (Examples 4 to 8), the grain size distribution is varied by changing the grain sizes of the respective ceria-zirconia powders contained in slurry I and slurry II, while maintaining a constant mixing ratio between slurry I and slurry II. As can be seen from FIG. 4, the resistivity of the oxide semiconductor layer 11 is decreased also in Examples 4 to 8 (in which both slurry I and slurry II are used), with a particularly large decrease in resistivity in the rich region.

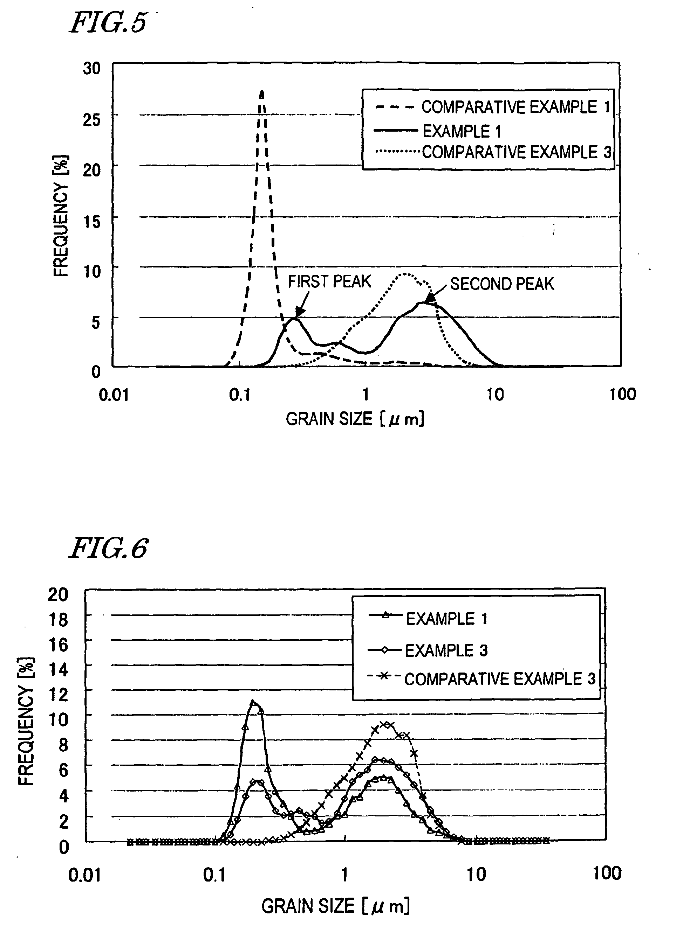

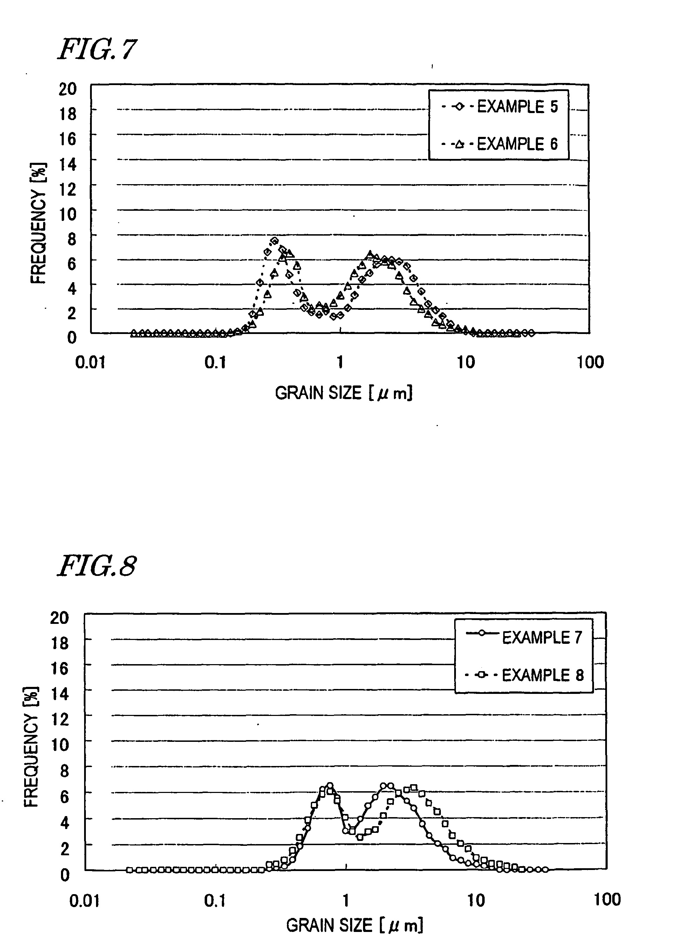

FIGS. 5 to 8 show grain size distributions of the oxide semiconductor particles 11a in Examples 1, 3, and 5 to 8 as well as in Comparative Examples 1 and 3. The grain size distributions of FIGS. 5 to 8 show distributions on a volumetric basis, which were measured by using Laser Diffraction/Scattering-type Particle Size Distribution Analyzer LA-920 (manufactured by HORIBA, Ltd.). Note that the grain size distributions shown herein were obtained from before baking the slurries; however, hardly any grain growth occurred from baking, and the grain size distributions experienced no substantial changes after baking.

As shown in FIG. 5, Comparative Example 1 shows a peak near the grain size of 0.15 µm (150 nm), whereas Comparative Example 3 shows a peak near the grain size of 1.5 µm. On the other hand, Example 1 shows a first peak and a second peak near the grain size of 0.25 µm and the grain size 2.5 µm, respectively; that is, a peak exists in a grain size range of less than 1 µm and another peak exists in a grain size range exceeding 1 µm. Moreover, as shown in FIGS. 6 to 8, Examples 3 and 5 to 8 also show a peak in a grain size range of less than 1 µm and another peak in a grain size range exceeding 1 µm. Since the oxide semiconductor particles 11a have such a grain size distribution, the resistivity of the oxide semiconductor layer 11 in the rich region is greatly reduced, as is also shown in FIG. 3 and FIG. 4. As a result, the sensor output has a large oxygen partial pressure dependence, whereby the detection accuracy is improved.

The presumable reason why the resistivity of the oxide semiconductor layer 11 is reduced when the oxide semiconductor particles 11a have the aforementioned grain size distribution is that, by mixing a powder of a relatively small grain size and a powder of a relatively large grain size, the fluidity of the slurry is improved in such a manner as to facilitate the film formation by screen printing technique, thus making it possible to form a denser oxide semiconductor layer 11.

Table 1 and Table 2 also shows results of evaluating ruggednesses on the surface of the oxide semiconductor layer 11 formed by screen printing technique, indicated as "printability". Specifically, films (oxide semiconductor layer 11) which were formed by screen printing technique were observed by using an ultra-deep profile measuring microscope (VK-8550, manufactured by KEYENCE CORPORATION). Those examples in which traces of meshes were left on the film, thus resulting in a disrupted film consisting of island-like patches, are indicated as "×", whereas those examples which resulted in continuous films are indicated as " O ". As shown in Table 1 and Table 2, the printability was low in Comparative Example 1, in which only slurry I (containing a powder of a small grain size) was used, whereas the printability was high in Examples 1 to 8, in which slurry I and slurry II were used in combination.

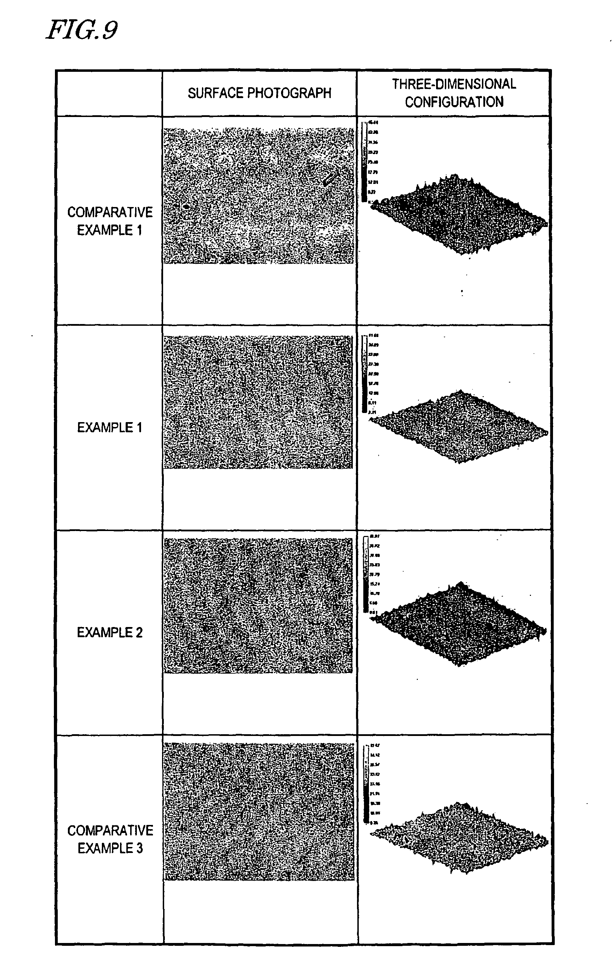

FIG. 9 shows, with respect to each of Examples 1 and 2 and Comparative Examples 1 and 3, a micrograph of the surface of the oxide semiconductor layer 11 and a three-dimensional configuration of the surface of the oxide semiconductor layer 11 (measured by Ultra-Deep Profile Measuring Microscope VK-8550, manufactured by KEYENCE CORPORATION). As shown in FIG. 9, in Comparative Example 1, significant ruggednesses are present on the surface of the oxide semiconductor layer 11, indicative of a low printability. On the other hand, in Examples 1 and 2, no significant ruggednesses exist on the surface of the oxide semiconductor layer 11, indicative of a high printability. Note that no significant ruggednesses exist on the surface of the oxide semiconductor layer 11 in Comparative Example 3 either, and therefore Comparative Example 3 shows a printability which is not too low. However, as is also shown in Table 1, the oxide semiconductor layer 11 of Comparative Example 3 has a high resistivity and a small resistivity gap, which hinder adequate detection of oxygen concentration.

Note that, in the present embodiment, coarse (i.e., having a large grain size) oxide semiconductor particles 11a are purposely contained in the oxide semiconductor layer 11, which invites some decrease in the surface area of the oxide semiconductor layer 11 having a porous structure; however, this does not slow the response time of the oxygen sensor 10. This is presumably because the response time depends not such much on the surface area of the oxide semiconductor layer 11 as on the thickness and/or porosity of the catalyst layer which is provided on the oxide semiconductor layer 11 (i.e., the response time is "bottlenecked" by the catalyst layer). Table 3 shows the thickness of the catalyst layer and the response time with respect to Example 1 and Comparative Example 3. As used herein, a response time is a period of time which lapses since the ambient gas transitions from a rich state (where the fuel concentration is higher than a stoichiometric air-fuel ratio) to a lean state (where the oxygen concentration is higher than the stoichiometric air-fuel ratio), or from a lean state to a rich state, until the resistivity of the oxide semiconductor layer 11 changes correspondingly. As shown in Table 3, given the same thickness of the catalyst layer, the response time was essentially the same.

**[Table 3]**

| | thickness of catalyst layer (µm) | response time (ms) |
|---|---|---|
| Ex.1 | 80 | 200 |
| CE.3 | 80 | 200 |

Moreover, although the present embodiment illustrates a case where the oxide semiconductor layer 11 is formed by a printing technique, the oxide semiconductor layer 11 may be formed by any technique other than a printing technique. Even in the case where a slurry is to be applied by using other techniques such as a dipping technique, the fluidity of the slurry is improved by mixing two kinds of slurries having different powder grain sizes as is done in the present embodiment, and thus it becomes possible to form a dense oxide semiconductor layer 11 (i.e., the moldability of the oxide semiconductor layer 11 is improved). Thus, similar effects can be obtained.

It will be appreciated that the preferable grain size distribution of the oxide semiconductor layer 11 is not limited to those exemplified in FIGS. 5 to 8, so long as a first peak exists in a grain size range of less than 1 µm and a second peak exists in a grain size range exceeding 1 µm.

From the standpoint of improving the detection accuracy, the first peak is preferably in a grain size range of 0.8 µm or less (as in Examples 1, 3, and 5 to 8, for example), and more preferably in a grain size range of 0.4 µm or less (as in Examples 1, 3, 5, and 6, for example). From the standpoint of sufficiently improving the fluidity of the slurry for an enhanced printability (moldability), the second peak is preferably in a grain size range of 1.5 µm or more (as in Examples 1, 3, and 5 to 8, for example) and more preferably in a grain size range of 2.0 µm or more (as in Examples 1, 3, 5, 7, and 8, for example).

Note that, if the grain size of the oxide semiconductor particles 11a is too small, cohesion between particles will become outstanding and lower the slurry fluidity, thus making molding difficult. If the grain size of the oxide semiconductor particles 11a is too large, sufficient sintering between particles may not occur during a heat treatment, thus resulting in a reduced mechanical strength of the film and allowing detachment of the particles. Therefore, the first peak is preferably within a grain size range of 0.05 µm or more, and the second peak is preferably within a grain size range of 10 µm or less.

Moreover, from both a standpoint of detection accuracy improvement and a standpoint of printability (moldability), it is preferable that the difference S₂-S₁ between a grain size S₁ at which the first peak is located and a grain size S₂ at which the second peak is located is 2 µm or more, or that the ratio therebetween S_{2/}S₁ is equal to or greater than 7.

The oxygen sensor 10 of the present embodiment can be produced as follows, for example.

First, the substrate 13 is provided. The substrate 13 has an insulative surface, and preferably has a heat resistance such that it experiences substantially no deformation or the like at the temperature of a heat treatment which is performed in the following process or at the temperature at which the oxygen sensor 10 is to be used. In the above Examples, alumina was used as the material of the substrate 13.

Next, the detection electrodes 12 are formed on the principal face 13a of the substrate 13. The detection electrodes 12 are made of a material which is electrically conductive and which has a heat resistance similar to that of the substrate 13. As a method for forming the electrodes 12, a screen printing technique can be employed, for example. In the Examples, after a platinum paste was applied on the principal face 13a by a screen printing technique, baking was performed, whereby the detection electrodes 12 were formed.

Next, the oxide semiconductor layer 11 is formed so as to cover the detection electrodes 12. Specifically, two kinds of slurries containing oxide semiconductor particles 11a are prepared first, such that the grain size of the oxide semiconductor particles 11a contained in one slurry is different from that of the other slurry.

Next, after these slurries are mixed at a predetermined ratio, they are applied on the principal face 13a of the substrate 13 so as to cover the detection electrodes 12, and thereafter subjected to baking, thereby forming the oxide semiconductor layer 11 having a porous structure. As a method of applying the slurries, a screen printing technique or a dipping technique may be used.

In the above Examples, ceria-zirconia powder was used as the oxide semiconductor particles 11a**.** Ceria-zirconia powder is a powder of composite oxide whose main component is cerium and which has 20 mol% zirconium added thereto (expressed by the chemical formula Ce_{0.8}Zr_{0.2}O₂₋₀).

In addition to forming the detection electrodes 12 and the oxide semiconductor layer 11 on the principal face 13a of the substrate 13 as described above, the heater 14 is formed on the rear face 13b of the substrate 13. As the material of the heater 14, a metal material such as platinum or tungsten can also be used. Moreover, a nonmetal material can also be used, e.g., an oxide conductor such as rhenium oxide can be used. As a method for forming the heater 14, a screen printing technique is suitably used. The oxygen sensor 10 can be produced in the above-described manner.

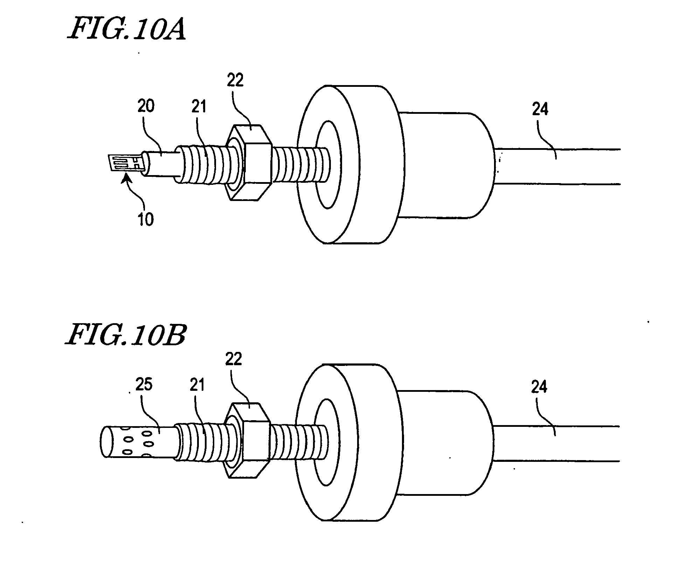

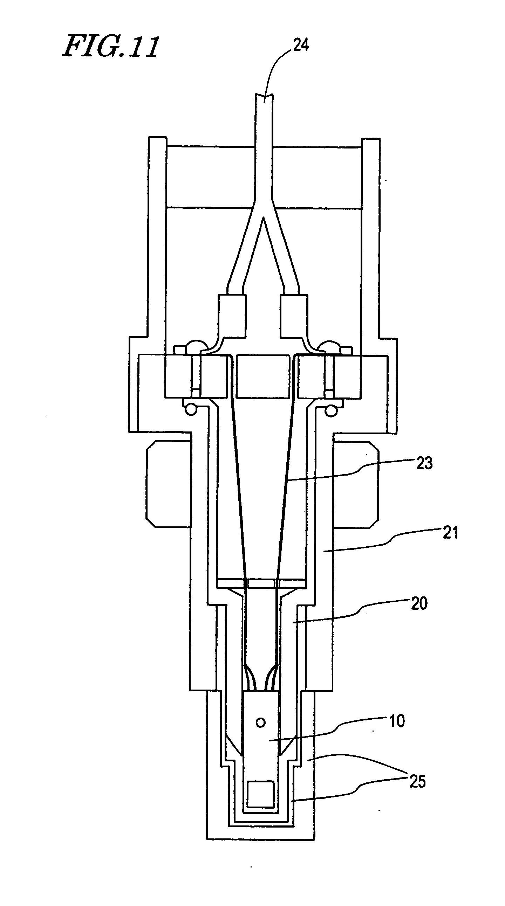

Next, with reference to FIGS. 10A and 10B and FIG. 11, a construction for actually attaching the oxygen sensor 10 to an exhaust pipe of an internal combustion engine will be described.

At its base end, the oxygen sensor 10 is held by a first housing 20, as shown in FIGS. 10A and 11. The first housing 20 is a ceramic guide which is made of a ceramic material, for example. Furthermore, the first housing 20 carrying the oxygen sensor 10 is held in place by a second housing 21. The second housing 21 is a metal case which is made of stainless steel, for example. The surface of the second housing 21 is threaded, and the second housing 21 is affixed to an exhaust pipe with a nut 22 which engages with the threading.

In actual use, as shown in FIG. 10B**,** a protection cap 25 is provided so as to cover the oxygen sensor 10. The result of detection by the oxygen sensor 10 is output to a control device via a detection line 24. The inside of the first housing 20 is sealed in an airtight manner by using a filler (e.g., talc powder) 23.

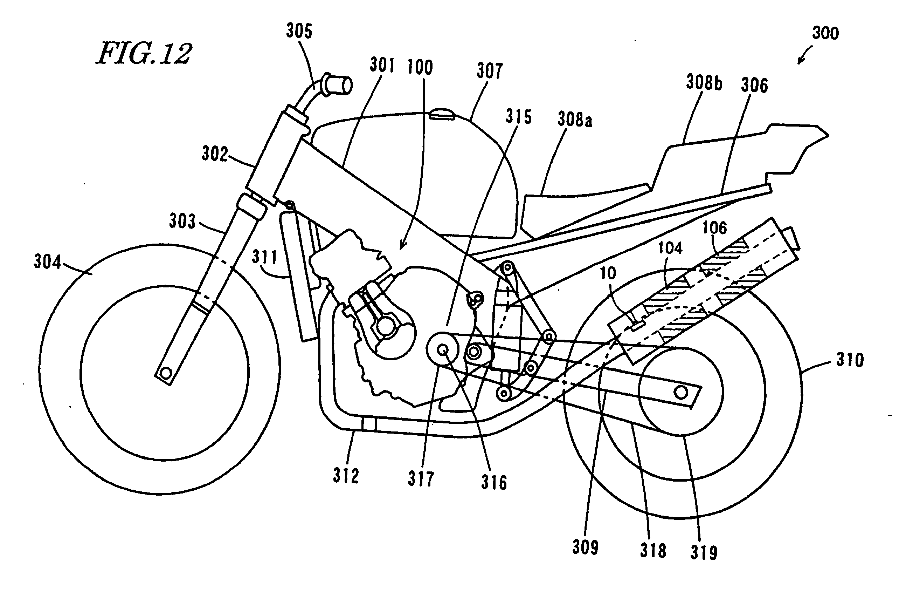

Next, a vehicle which incorporates the oxygen sensor 10 according to the present embodiment and which employs an internal combustion engine as a driving source will be described. FIG. 12 schematically shows a motorcycle 300 incorporating the oxygen sensor 10.

As shown in FIG. 12, the motorcycle 300 includes a body frame 301 and an engine (internal combustion engine) 100. A head pipe 302 is provided at the front end of the body frame 301. To the head pipe 302, a front fork 303 is attached so as to be capable of swinging in the right-left direction. At the lower end of the front fork 303, a front wheel 304 is supported so as to be capable of rotating. Handle bars 305 are attached to the upper end of the head pipe 302.

A seat rail 306 is attached at an upper portion of the rear end of the body frame 301 so as to extend in the rear direction. A fuel tank 307 is provided above the body frame 301, and a main seat 308a and a tandem seat 308b are provided on the seat rail 306. Moreover, rear arms 309 extending in the rear direction are attached to the rear end of the body frame 301. At the rear end of the rear arms 309, a rear wheel 310 is supported so as to be capable of rotating.

The engine 100 is held at the central portion of the body frame 301. A radiator 311 is provided in front of the engine 100. An exhaust pipe 312 is connected to an exhaust port of the engine 100. As will be specifically described below, an oxygen sensor 10, a ternary-type catalyst 104, and a muffler 106 are provided on the exhaust pipe (in an ascending order of distance from the engine 100). The top end of the oxygen sensor 10 is exposed in a passage within the exhaust pipe 312 in which exhaust gas travels. Thus, the oxygen sensor 10 detects oxygen within the exhaust gas. The oxygen sensor 10 has the heater 14 as shown in FIG. 1, etc., attached thereto. As the temperature of the oxide semiconductor layer 11 is elevated by the heater 14 at the start of the engine 100 (e.g., elevated to 700 °C in 5 seconds), the detection sensitivity of the oxide semiconductor layer 11 is enhanced.

A transmission 315 is linked to the engine 100. Driving sprockets 317 are attached on an output axis 316 of the transmission 315. Via a chain 318, the driving sprockets 317 are linked to rear wheel sprockets 319 of the rear wheel 310.

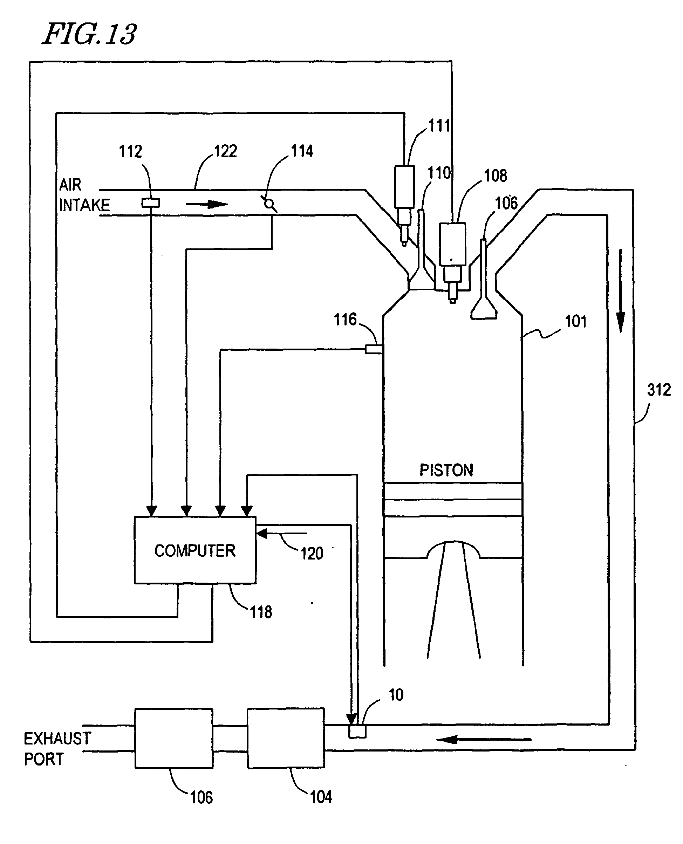

FIG. 13 shows main component elements of a control system of the engine 100. On a cylinder 101 of the engine 100, an intake valve 110, an exhaust valve 106, and a spark plug 108 are provided. There is also provided a water temperature sensor 116 for measuring the water temperature of the cooling water with which to cool the engine. The intake valve 110 is connected to an intake manifold 122, which has an air intake. On the intake manifold 122, an airflow meter 112, a throttle sensor 114 for a throttle valve, and a fuel injector 111 are provided.

The airflow meter 112, the throttle sensor 114, the fuel injector 111, the water temperature sensor 116, the spark plug 108, and the oxygen sensor 10 are connected to a computer 118, which is the control section. A vehicle velocity signal 120, which represents the velocity of the motorcycle 300, is also input to the computer 118.

When a rider starts the engine 100 by using a self-starting motor (not shown), the computer 118 calculates an optimum fuel amount based on detection signals and the vehicle velocity signal 120 obtained from the airflow meter 112, the throttle sensor 114, and the water temperature sensor 116, and based on the result of calculation, outputs a control signal to the fuel injector 111. The fuel which is injected from the fuel injector 111 is mixed with the air which is supplied from the intake manifold 122, and injected into the cylinder 101 via the intake valve 110, which is opened or closed with appropriate timing. The fuel which is injected in the cylinder 101 combusts to become exhaust gas, which is led to the exhaust pipe 312 via the exhaust valve 106.

The oxygen sensor 10 detects the oxygen in the exhaust gas, and outputs a detection signal to the computer 118. Based on the signal from the oxygen sensor 10, the computer 118 determines the amount of deviation of the air-fuel ratio from an ideal air-fuel ratio. Then, the amount of controlled so as to attain the ideal air-fuel ratio relative to the air amount which is known from the signals obtained from the airflow meter 112 and the throttle sensor 114. Thus, an air-fuel ratio controller which includes the oxygen sensor 10 and the computer (control section) 118 connected to the oxygen sensor 10 appropriately controls the air-fuel ratio of the internal combustion engine.

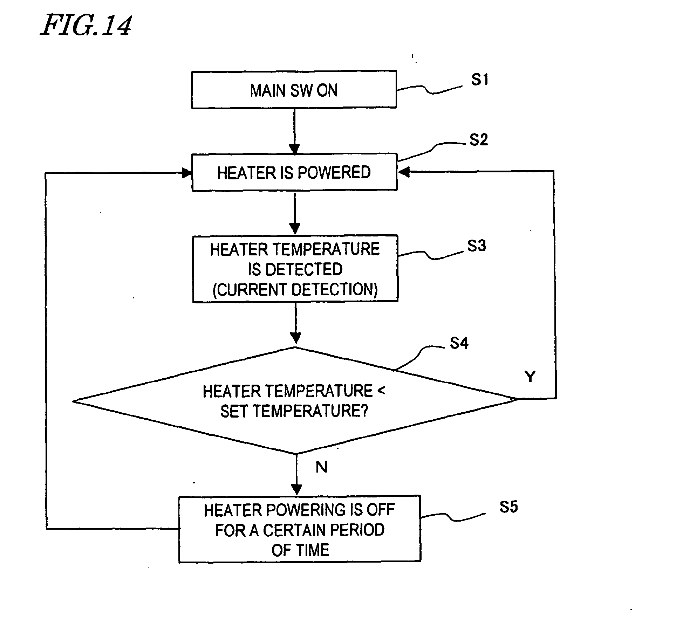

FIG. 14 shows a flow of control for the heater 14 of the oxygen sensor 10. When the engine 100 is started and the main switch is placed in an ON state (step S1), the heater 14 begins to be powered (step S2). Next, the temperature of the heater 14 is detected (step S3), and it is determined whether the temperature of the heater 14 is lower than a set temperature or not (step S4). Detection of the temperature of the heater 14 can be performed by, utilizing the fact that the resistance value of the heater 14 changes depending on temperature, detecting the electric current which flows in the heater 14. If the temperature of the heater 14 is lower than the set temperature, the heater 14 continues to be powered (step S2). On the other hand, if the temperature of the heater 14 is equal to or greater than the set temperature, powering of the heater 14 is stopped for a certain period of time (step S5), and after resuming powering of the heater 14 (step S2), the temperature of the heater 14 is detected (step S3). Through such a flow of control, the temperature of the heater 14 is kept constant.

In the motorcycle 300 incorporating the oxygen sensor 10 of the present embodiment, after the start of the engine 100, the oxygen concentration within the exhaust gas and changes therein can be detected with a good detection accuracy. This ensures that, even at the start, fuel and air are mixed at an appropriate air-fuel ratio, and allow the fuel to combust under optimum conditions, whereby the concentration of regulated substances (e.g., NOₓ) within the exhaust gas can be reduced. It is also possible to obtain improved mileage.

Although a motorcycle has been illustrated for instance, the present invention can also be suitably used for any other transportation apparatus, e.g., a four-wheeled automobile. Moreover, the internal combustion engine is not limited to a gasoline engine, but may alternatively be a diesel engine.

According to the present invention, the detection accuracy of a resistance-type oxygen sensor employing an oxide containing cerium can be improved.

The oxygen sensor according to the present invention has an excellent detection accuracy, and therefore is suitably used in an internal combustion engine for various transportation apparatuses, e.g., a car, a bus, a truck, a motorbike, a tractor, an airplane, a motorboat, a vehicle for civil engineering use, or the like.

## Claims

1. An oxygen sensor (10) of a resistance-type comprising:
an oxide semiconductor layer (11); and
detection electrodes (12) for detecting a resistivity of the oxide semiconductor layer (11), wherein,
the oxide semiconductor layer (11) includes oxide semiconductor particles (11a) composed of an oxide containing cerium; and
the oxide semiconductor particles (11a) have a grain size distribution with a first peak existing in a grain size range of less than 1 µm; **characterized in** a second peak existing in a grain size range exceeding 1 µm.

2. The oxygen sensor of claim 1, wherein the first peak exists in a grain size range of 0.8 µm or less.

3. The oxygen sensor of claim 1 or 2, wherein the first peak exists in a grain size range of 0.4 µm or less.

4. The oxygen sensor of any of claims 1 to 3, wherein the second peak exists in a grain size range of 1.5 µm or more.

5. The oxygen sensor of any of claims 1 to 4, wherein the second peak exists in a grain size range of 2.0 µm or more.

6. The oxygen sensor of any of claims 1 to 5, wherein the oxide composing the oxide semiconductor particles (11 a) further contains zirconium.

7. An internal combustion engine comprising the oxygen sensor (10) of any of claims 1 to 6.

8. A transportation apparatus comprising the internal combustion engine of claim 7.

## Patentansprüche

1. Sauerstoffsensor (10) eines Widerstands- Typs, aufweisend:
eine Oxid- Halbleiterschicht (11); und
Erfassungselektroden (12) zum Erfassen eines Widerstands der Oxid- Halbleiterschicht (11), wobei
die Oxid- Halbleiterschicht (11) Oxid- Halbleiterpartikel (11a), bestehend aus einem Oxidenthaltenden Cerium, enthält; und
die Oxid- Halbleiterpartikel (11a) eine Korngrößenverteilung mit einer ersten Spitze haben, die in einem Komgrößenbereich von weniger als 1 µm existiert, **gekennzeichnet** in einer zweiten Spitze, die in einem Komgrößenbereich vorhanden ist, der 1 µm überschreitet.

2. Sauerstoffsensor nach Anspruch 1, wobei die erste Spitze in einem Komgrößenbereich von 0,8 µm oder weniger vorhanden ist.

3. Sauerstoffsensor nach Anspruch 1 oder 2, wobei die erste Spitze in einem Komgrößenbereich von 0,4 µm oder weniger vorhanden ist.

4. Sauerstoffsensor nach Anspruch 1 bis 3, wobei die zweite Spitze in einem Komgrößenbereich von 1,5 µm oder mehr vorhanden ist.

5. Sauerstoffsensor nach einem der Ansprüche 1 bis 4, wobei die zweite Spitze in einem Komgrößenbereich von 2,0 µm oder mehr vorhanden ist.

6. Sauerstoffsensor nach einem der Ansprüche 1 bis 5, wobei das Oxid, das die Oxid- Halbleiterpartikel (11a) bildet, außerdem Zirkonium enthält.

7. Brennkraftmaschine mit dem Sauerstoffsensor (10) nach einem der Ansprüche 1 bis 6.

8. Transportvorrichtung, die die Brennkraftmaschine nach Anspruch 7 aufweist.

## Revendications

1. Capteur d'oxygène (10) d'un type résistif comprenant :
une couche semi-conductrice d'oxyde (11) ; et
des électrodes de détection (12) pour détecter une résistivité de la couche semi-conductrice d'oxyde (11), dans lequel,
la couche semi-conductrice d'oxyde (11) comprend des particules semi-conductrices d'oxyde (11a) composées d'un oxyde contenant du cérium ; et
les particules semi-conductrices d'oxyde (11a) ont une répartition granulométrique avec un premier pic présent dans une plage de tailles de grain inférieure à 1 µm ; **caractérisé en ce qu'**un deuxième pic est présent dans une plage de tailles de grain dépassant 1 µm.

2. Capteur d'oxygène selon la revendication 1, dans lequel le premier pic est présent dans une plage de tailles de grain de 0,8 µm ou moins.

3. Capteur d'oxygène selon la revendication 1 ou 2, dans lequel le premier pic est présent dans une plage de tailles de grain de 0,4 µm ou moins.

4. Capteur d'oxygène selon l'une quelconque des revendications 1 à 3, dans lequel le deuxième pic est présent dans une plage de tailles de grain de 1,5 µm ou plus.

5. Capteur d'oxygène selon l'une quelconque des revendications 1 à 4, dans lequel le deuxième pic est présent dans une plage de tailles de grain de 2,0 µm ou plus.

6. Capteur d'oxygène selon l'une quelconque des revendications 1 à 5, dans lequel l'oxyde composant les particules semi-conductrices d'oxyde (11a) contient en outre du zirconium.

7. Moteur à combustion interne comprenant le capteur d'oxygène (10) selon l'une quelconque des revendications 1 à 6.

8. Appareil de transport comprenant le moteur à combustion interne de la revendication 7.
